# EUROPÄISCHE PATENTSCHRIFT

(11) **EP 2 212 877 B1**
(45) Veröffentlichungstag und Bekanntmachung des Hinweises auf die Patenterteilung: **06.07.2016**
(21) Anmeldenummer: 08804451.6
(22) Anmeldetag: 19.09.2008
(51) Int. Cl.: G09B 29/10, G01C 21/32

(54) **LOKALISIERUNGSVERFAHREN**
LOCALIZATION METHOD
PROCÉDÉ DE LOCALISATION

(30) Priorität: 16.11.2007 DE 102007054818
(43) Veröffentlichungstag der Anmeldung: 04.08.2010
(73) Patentinhaber: Robert Bosch GmbH, 70442 Stuttgart (DE)
(72) Erfinder: PFEIFFER, Heinz-Werner, 31249 Hohenhameln (DE); WARTENBERG, Maylin, 38114 Braunschweig (DE)
(86) Internationale Anmeldenummer: PCT/EP2008/062517
(87) Internationale Veröffentlichungsnummer: WO 2009/062774

(56) Entgegenhaltungen:
- DE-A1-102005 041 123
- SCHNEEBAUER C ET AL: "On-The-Fly Location Referencing Methods for Establishing Traffic Information Services", IEEE AEROSPACE AND ELECTRONIC SYSTEMS MAGAZINE, IEEE SERVICE CENTER, PISCATAWAY, NJ, US, vol. 22, no. 2, 1 February 2007 (2007-02-01), pages 14-21, XP011184157, ISSN: 0885-8985
- WARTENBERG ET AL: "Algorithms for Location Referencing", JAHRESBERICHT DER DEUTSCHEN MATHEMATIKER VEREINIGUNG,, vol. 108, no. 1, 1 January 2006 (2006-01-01), pages 33-44, XP009135554, ISSN: 0012-0456

## Beschreibung

### Stand der Technik

Die vorliegende Erfindung betrifft eine Navigationszentrale gemäß dem Oberbegriff des Patentanspruchs 1.

Ein Lokalisierungsverfahren ist aus der DE 10 2005 041 123 bekannt und umfaßt die folgenden Schritte: Festlegen eines Punktes erster Ordnung einer Punktmenge auf einer ersten Karte eines Verkehrswegenetzes; Bestimmen von Punkten zweiter Ordnung der Punktmenge in einem Abstand erster Ordnung von dem Punkt erster Ordnung der Punktmenge auf der ersten Karte; Festlegen eines entsprechenden Punktes erster Ordnung einer entsprechenden Punktmenge auf einer zweiten Karte; und Bestimmen von entsprechenden Punkten zweiter Ordnung der entsprechenden Punktmenge in dem Abstand erster Ordnung von dem entsprechenden Punkt erster Ordnung der entsprechenden Punktmenge auf der zweiten Karte. Die erste Karte ist in dem Speicher einer Navigationszentrale gespeichert, die dafür vorgesehen ist, weitere und aktuellere Karteninformation für Verkehrsteilnehmer, insbesondere Kraftfahrzeuge bereitzustellen. Ausgehend von den Punkten zweiter Ordnung können analog auch Punkte höherer Ordnung jeweils in einem Abstand zweiter Ordnung von den Punkten zweiter Ordnung bestimmt werden. Die Punkte zweiter Ordnung und eventuell die Punkte höherer Ordnung werden durch die Navigationsvorrichtung kodiert zusammen mit den geographischen Koordinaten des Punkts erster Ordnung an eine Navigationsvorrichtung übermittelt, die dafür vorgesehen ist, eine Route zu berechnen und einen Kraftfahrzeugführer entlang der Route zu führen. Die Navigationsvorrichtung bestimmt ausgehend von dem entsprechenden Punkt erster Ordnung mit denselben geographischen Daten wie der Punkt erster Ordnung die entsprechenden Punkte zweiter Ordnung. Anhand des Kodes kann die Navigationsvorrichtung erkennen, ob die Punkte zweiter Ordnung mit den entsprechenden Punkten zweiter Ordnung übereinstimmen, d.h. die Punkte zweiter Ordnung der ersten Karte auf der zweiten Karte richtig lokalisiert sind. Das Gleiche gilt für Punkte höherer Ordnung.

Ein Nachteil liegt darin, daß die zu übertragenden Datenmenge mit der Anzahl der Punkte steigt. Das Lokalisierungsverfahren ist daher nicht geeignet, Punkte in einem ausgedehnten Bereich oder weit auseinander liegenden Bereichen zu lokalisieren, wenn die Bandbreite des Übertragungskanals beschränkt ist

### Offenbarung der Erfindung

Der vorliegenden Erfindung liegt die Aufgabe zugrunde, eine Navigationszentrale und eine Navigationsvorrichtung zu schaffen, die geeignet sind, Punkte in ausgedehnten Bereichen und weit auseinander liegenden Bereichen zu lokalisieren. Die der Erfindung zugrunde liegende Aufgabe wird durch eine Navigationszentrale mit den Merkmalen des Patentanspruchs 1 gelöst.

Gegenüber einem bekannten Lokalisierungsverfahren sind folgende weitere Schritte auszuführen: Festlegen eines weiteren Punktes erster Ordnung einer weiteren Punktmenge auf der ersten Karte; Bestimmen von weiteren Punkten zweiter Ordnung der weiteren Punktmenge in einem weiteren Abstand erster
Ordnung von dem weiteren Punkt erster Ordnung der weiteren Punktmenge auf der ersten Karte; Festlegen eines weiteren entsprechenden Punktes erster Ordnung einer weiteren entsprechenden Punktmenge auf der zweiten Karte; und Bestimmen von weiteren entsprechenden Punkten zweiter Ordnung der weiteren entsprechenden Punktmenge in dem weiteren Abstand erster Ordnung von dem weiteren entsprechenden Punkt erster Ordnung der weiteren entsprechenden Punktmenge auf der zweiten Karte. Sämtliche Abstände sind beliebig und können gleich groß sein. Die weitere Punktmenge ermöglicht es, eine hohe Anzahl Punkte zu erhalten, ohne daß viele Punkte eine hohe Ordnung haben. Dementsprechend werden weniger Fehler bei der Lokalisierung von einem Punkt auf einen abhängigen Punkt der nächst höheren Ordnung übertragen. Die Punktmenge und die weitere Punktmenge können in einem ausgedehnten Bereich so angeordnet werden, daß sie diesen besonders gut abdecken bzw. markante Punkte in dem ausgedehnten Bereich abdecken. Insbesondere können Straßenelemente wie Kreisverkehre und Ringstraßen gut beschrieben werden.

Ferner sind optional folgende weitere Schritte durchzuführen: Bestimmen von Punkten (n+1)-ter Ordnung der Punktmenge jeweils in einem Abstand n-ter Ordnung von einem der Punkte n-ter Ordnung der Punktmenge auf der ersten Karte, wobei n größer als 2 gilt; und Bestimmen von entsprechenden Punkten (n+1) -ter Ordnung der entsprechenden Punktmenge jeweils in einem Abstand n-ter Ordnung von einem der entsprechenden Punkte n-ter Ordnung der entsprechenden Punktmenge auf der zweiten Karte. Sämtliche Abstände sind wiederum beliebig und können gleich groß sein. Punktmengen mit Punkten höherer Ordnung ermöglichen es, die Anzahl der Punktmengen auf ein Minimum zu reduzieren. Dementsprechend müssen nur wenige geographische Koordinaten von Ursprungspunkten von einer Navigationszentrale an eine Navigationsvorrichtung übermittelt werden.

Außerdem können folgende weitere Schritte durchgeführt werden: Bestimmen von weiteren Punkten (n+1)-ter Ordnung der weiteren Punktmenge jeweils in einem weiteren Abstand n-ter Ordnung von einem der weiteren Punkte n-ter Ordnung der weiteren Punktmenge auf der ersten Karte, wobei n größer als 2 gilt; und Bestimmen von weiteren entsprechenden Punkten (n+1)-ter Ordnung der weiteren entsprechenden Punktmenge jeweils in einem weiteren Abstand n-ter Ordnung von einem der weiteren entsprechenden Punkte n-ter Ordnung der weiteren Punktmenge auf der zweiten Karte. Die weiteren Punkte der weiteren Punktmenge und die Punkte der Punktmenge können eine unterschiedliche maximale Ordnung haben.

Die Punkte können auf Verkehrswegen des Verkehrswegenetzes liegen, und es kann eine Verknüpfung eines bestimmten Punkts der Punktmenge mit einem bestimmten weiteren Punkt der weiteren Punktmenge durch das Verkehrswegenetz bestimmt werden.

Zu einem weiteren bestimmten Punkt der Punktmenge kann eine weitere Angabe gemacht werden. Bei der Angabe kann es sich beispielsweise um einen Routenwiderstand bzw. eine Änderung des Routenwiderstands (Straßensperrung), aktuelle Durchflussgeschwindigkeit oder Beschaffenheit der Straße wie Feuchte, Oberflächentemperatur und Reibwert handeln. Unter Verwendung von Angaben zu zwei Punkten, welche einen Straßenabschnitt begrenzen, können solche Angaben zu dem betreffenden Straßenabschnitt gemacht werden. Unter Verwendung von Angaben zu mehr als zwei Punkten, die einen Bereich eines Straßennetzes begrenzen, können solche Angaben auch zu einem Ausschnitt des Straßennetzes gemacht werden.

In noch einer Weiterbildung wird die Punktmenge binär kodiert, wird die Verknüpfung als Attribut zu dem bestimmten Punkt der Punktmenge dargestellt, wird die weitere Angabe als Attribut zu dem weiteren bestimmten Punkt der Punktmenge dargestellt, und werden der binäre Kode der Punktmenge und die Attribute von einer Navigationszentrale zu einem Navigationssystem gesendet. Im Regelfall werden die weiteren Punkte der weiteren Punktmenge analog verarbeitet. Für Angaben zu mehreren Punkten werden die Angaben jeweils als ein Attribut zu dem jeweiligen Punkt dargestellt.

Die vorliegende Erfindung betrifft eine Navigationszentrale, wobei die Navigationszentrale eingerichtet ist, einen weiteren Punkt erster Ordnung einer weiteren Punktmenge auf einer ersten Karte eines Verkehrswegenetzes festzulegen und weitere Punkten zweiter Ordnung der weiteren Punktmenge in einem weiteren Abstand erster Ordnung von dem weiteren Punkt erster Ordnung der weiteren Punktmenge auf der ersten Karte zu bestimmen. Die Navigationszentrale ist dazu eingerichtet, geographische Koordinaten des Punktes erster Ordnung und des weiteren Punktes erster Ordnung, des Abstandes erster Ordnung und des weiteren Abstandes erster Ordnung sowie relative Koordinaten der Punkte zweiter Ordnung bezüglich des Punktes erster Ordnung und relative Koordinaten der weiteren Punkte zweiter Ordnung bezüglich des weiteren Punktes erster Ordnung an eine Navigationsvorrichtung zu übermitteln, wobei jeder Punkt zweiter Ordnung nur bezüglich eines der Punkte erster Ordnung übermittelt wird.

Eine Navigationsvorrichtung ist eingerichtet eine weiteren entsprechenden Punkt erster Ordnung einer weiteren entsprechenden Punktmenge auf einer zweiten Karte des Verkehrswegenetzes festzulegen und weitere entsprechende Punkte zweiter Ordnung der weiteren entsprechenden Punktmenge in dem weiteren Abstand erster Ordnung von dem weiteren entsprechenden Punkt erster Ordnung der weiteren entsprechenden Punktmenge auf der zweiten Karte zu bestimmen.

### Kurze Beschreibung der Zeichnung

Im folgenden wird die Erfindung mit Bezugnahme auf die Zeichnung näher beschrieben. Es zeigen:
FIG. 1 eine schematische Ansicht einer Navigationsvorrichtung und einer Navigationszentrale;
Fig. 2 einen Kartenausschnitt mit zwei räumlich getrennten Punktmengen;
Fig. 3A einen Kartenausschnitt mit den Ursprungspunkten von vielen Punktmengen in einem räumlich zusammenhängenden Bereich; und
Fig. 3B einen Kartenausschnitt mit einer verringerten Anzahl von räumlich zusammenhängenden Punktmengen.

### Ausführungsformen der Erfindung

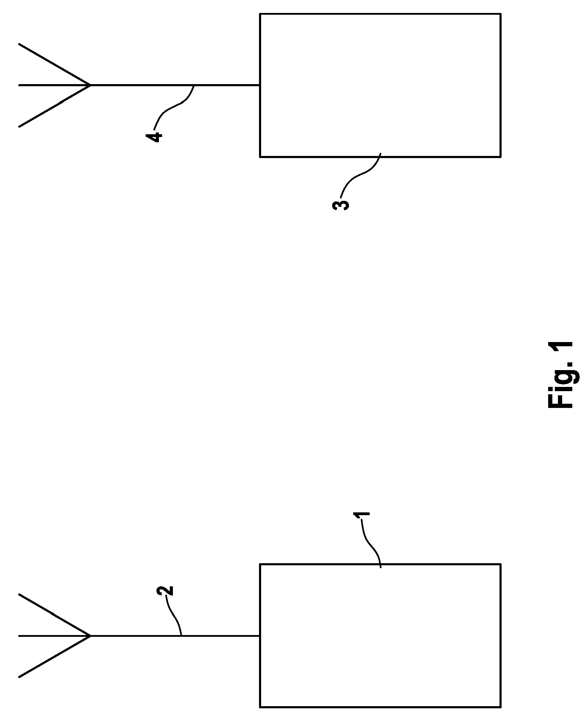

FIG. 1 zeigt eine schematische Ansicht einer Navigationsvorrichtung 1 und einer Navigationszentrale 3. Die Navigationsvorrichtung 1 kommuniziert mit der Navigationszentrale 3 über die Transceiver 2 und 4. Die Navigationsvorrichtung 1 führt einen Kraftfahrzeugführer entlang einer bestimmten Route. Die Navigationsvorrichtung 1 und die Navigationszentrale 3 haben einen üblichen Aufbau und sind daher nicht genauer dargestellt. Die Navigationsvorrichtung 1 und die Navigationszentrale 3 umfassen jeweils eine Von-Neumann-Maschine, die eine zentralen Prozessor, einen Eingabe/Ausgabe-Prozessor, Verbindungswege (Busse) und einen Arbeitsspeicher aufweist. Der zentrale Prozessor arbeitet dabei ein Maschineprogramm ab, das in dem Arbeitspeicher gespeichert ist. Der Eingabe/Ausgabe-Prozessor greift jeweils auf einen Kartenspeicher zu. Die Navigationsvorrichtung 1 und die Navigationszentrale 3 unterscheiden sich von einer gewöhnlichen Navigationsvorrichtung 1 jeweils durch das Maschinenprogramm, welches das unten beschriebene Verfahren abarbeitet. Die Navigationszentrale 3 umfaßt im Vergleich zu der Navigationsvorrichtung 1 aktuellere Karten- und Straßeninformation.

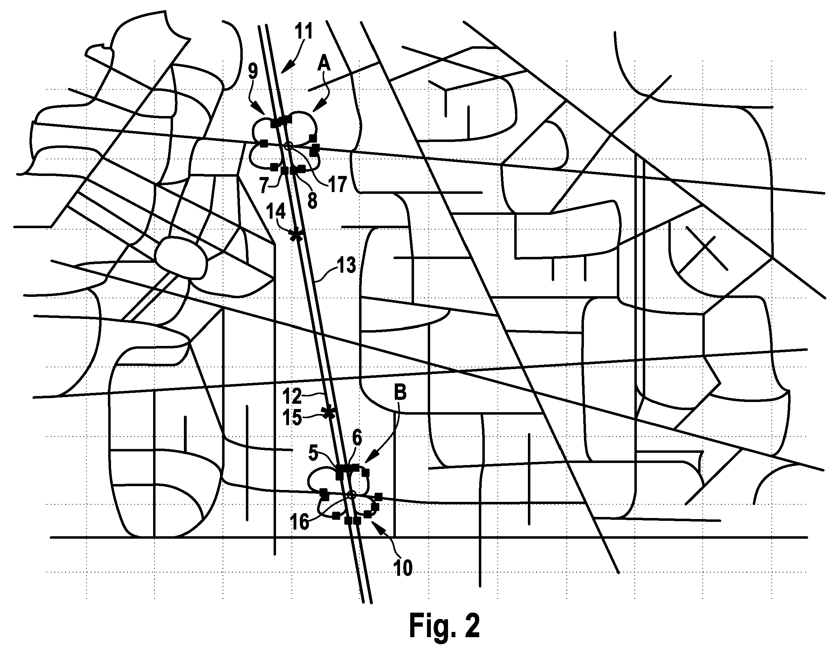

Fig. 2 zeigt einen Kartenausschnitt mit zwei räumlich getrennten Punktmengen A und B. Die Straßen werden hier und im folgenden als schwarze Linien dargestellt. Der Kartenausschnitt ist im Kartenspeicher der Navigationszentrale 3 gespeichert. Die Navigationszentrale 3 enthält die Information, daß die Spuren 12 der Autobahn 11 mit den entgegengesetzt gerichteten Spuren 12 und Spuren 13 in einem gewissen Bereich z.B. aufgrund eines Verkehrsunfalls durch Sperren 14, 15 gesperrt sind, die als Sterne dargestellt sind. Ein Kraftfahrzeugführer soll über die Sperren 14, 15 informiert werden. Dazu bildet die Navigationszentrale 3 einen ersten Ursprungspunkt 16 und einen zweiten Ursprungspunkt 17, die jeweils als Kreis dargestellt sind, bei einer Auftobahnauffahrt und - ausfahrt 9 bzw. einer Auftobahnauffahrt und -ausfahrt 10, welche den Sperren 14, 15 am nächsten liegen. Die Ursprungspunkte 16, 17 sind so gewählt, daß sie jeweils auf einer Straßenkreuzung liegen. Dabei bedeutet Straßenkreuzung in diesem Zusammenhang, daß zwei Straßen an einem Kreuzungspunkt die gleichen geographischen Koordinaten haben. Die eine Straße kann also auch über die andere Straße hinübergeführt sein, ohne daß es möglich ist, bei dem Kreuzungspunkt von der einen Straße auf die andere Straße zu gelangen. Ausgehend von diesen Ursprungspunkten 16, 17 werden in einem festen Abstand weitere Punkte gebildet, indem um die Ursprungspunkte 16 bzw. 17 herum zunächst Kreise mit einem bestimmten Radius gebildet werden und die Schnittpunkte der Kreise mit Verkehrswegen bestimmt werden. Die weiteren Punkte sind jeweils durch ein schwarzes Quadrat markiert. Der Ursprungspunkt wird als Punkt erster Ordnung bezeichnet. Die von dem Ursprungspunkt in einem festen Abstand vorgesehenen Punkte werden als Punkte zweiter Ordnung bezeichnet. Ausgehend von jedem Punkt zweiter Ordnung können analog Punkte dritter Ordnung bestimmt werden usw. Der Übersichtlichkeit wegen sind hier nur Punkte bis zur zweiten Ordnung dargestellt. Die Punkte 7, 8 der Punktmenge A sind mit den Punkten 5, 6 der Punktmenge B jeweils über einen Abschnitt der Spuren 12 bzw. 13 verbunden. Für die Routenführung ist es dabei gleichgültig, ob die Sperren 14, 15 wie angegeben angeordnet sind, oder der Abschnitt der Strecke 12 bereits bei den Punkten 7 und 8 gesperrt ist. Die Navigationszentrale faßt daher die Punkte 5, 7, welche auf den Spuren 12 am nächsten bei den Sperren 14, 15 sind, als fiktive Sperren auf. Außerdem wird bestimmt, welche Punkte der unterschiedlichen Punktmengen A, B miteinander über einen Streckenabschnitt verbunden sind. Im vorliegenden Fall sind dies die Punkte 5 und 7 bzw. die Punkte 6 und 8. Die Punktmengen A, B werden nun jeweils als Binärkode dargestellt, indem die Punkte höherer Ordnung (mindestens zweite Ordnung) jeweils ausgehend von dem Ursprungspunkt im Uhrzeigersinn von der Zwölf-Uhr-Stellung aus abgegangen werden. Dabei wird für einen von dem Ursprungspunkt wegführenden Schritt eine 1 gesetzt und für einen zu dem Ursprung hinführenden Schritt eine 0 gesetzt. Für die Punktmenge A der ersten Ordnung ergibt sich die einfache Folge 101010101010101010101010. Das Kodierungsverfahren ist nicht Gegenstand der vorliegenden Erfindung und aus der DE 10 2005 041 123 bekannt. Die fiktiven Sperren werden als Attribute zu den Punkten 5, 7 dargestellt. Dabei entspricht zum Beispiel der Punkt 8 der Binärfolge 101010101. Die Verbindungen zwischen den Punkten 5 und 7 bzw. 6 und 8 werden ebenfalls als Attribute zu jeweils einem der Punkte oder zu beiden Punkten dargestellt. Die geographischen Koordinaten der Ursprungspunkte 16, 17, die Binärkodes der Punktmengen A und B und die Attribute werden von der Navigationszentrale 3 an die Navigationsvorrichtung 1 gesendet. Eventuell werden auch ein von der Navigationszentrale 3 verwendeter Radius bzw. die von der Navigationszentrale 3 verwendeten Radien und die Ordnung der Punktmengen A, B an die Navigationsvorrichtung 1 gesendet. Die Navigationsvorrichtung 1 rekonstruiert hierauf die Punktmengen A, B mit entsprechenden Punkten in einer vorhandenen Karte nun mit Hilfe der geographischen Daten der Ursprungspunkte 16, 17 und des bekannten Radius bzw. der bekannten Radien, überprüft die erhaltenen Punktmengen anhand des Binärkodes und der Attribute, welche die Verbindungen angeben, und bestimmt die Sperren anhand der Attribute. Wenn die tatsächlichen Verbindungen nicht mit den Verbindungen übereinstimmen, die von den Attributen bekannt sind, liegt bei der Rekonstruktion ein Fehler vor. Im Zusammenhang mit der vorliegenden Erfindung wird die Abweichung der Karte der Navigationsvorrichtung 1 von der Karte der Navigationszentrale 3 nicht betrachtet, sondern ein Idealfall dargestellt, in dem die Karte der Navigationszentrale 3 mit der Karte der Navigationsvorrichtung 1 identisch ist. In diesem Idealfall ergibt sich durch die Rekonstruktion genau die Karte, die bereits in FIG. 2 dargestellt ist. Die Navigationsvorrichtung kann bei der Routenführung nun die Sperren berücksichtigen. Aus der DE 10 2005 041 123 ist bereits bekannt, daß das dargestellte Rekonstruktionsverfahren für voneinander abweichende Karten der Navigationsvorrichtung 1 und der Navigationszentrale 3 für eine Punktmenge geeignet ist. Das Gleiche gilt für mehrere Punktmengen.

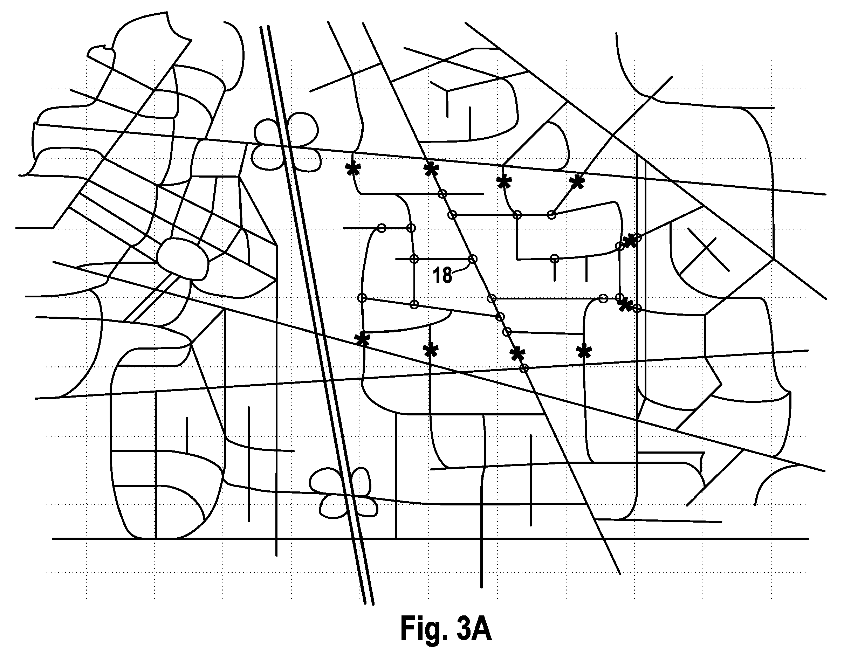

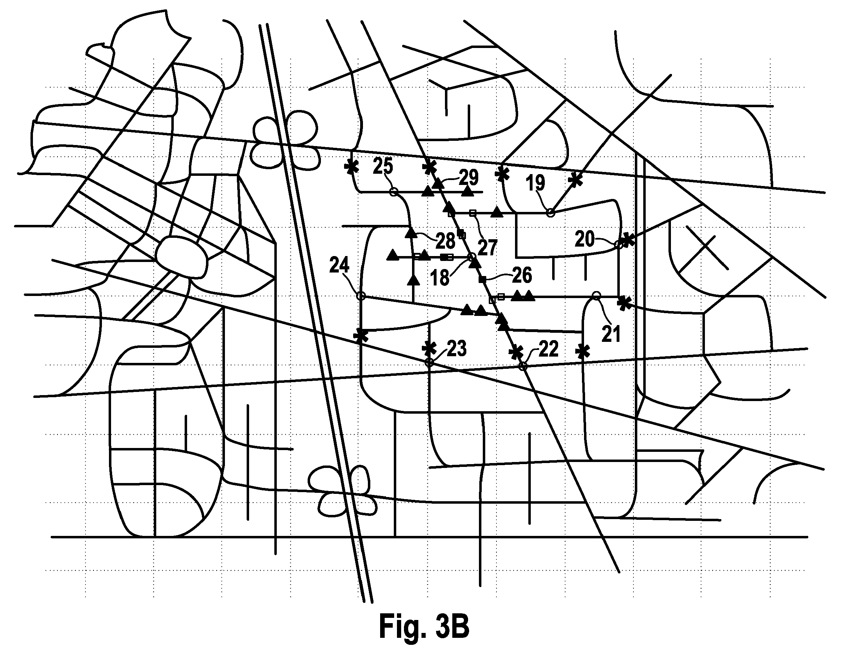

Fig. 3A zeigt einen Kartenausschnitt mit den Ursprungspunkten von vielen Punktmengen in einem räumlich zusammenhängenden Bereich. Die Ursprungspunkte sind wieder als Kreise dargestellt. Ein gewisses Gebiet ist aufgrund einer Veranstaltung abgesperrt. Die Absperrungen sind wieder als Sterne dargestellt. Die Punktmengen dienen dazu die Absperrungen zu lokalisieren. Es sind der Übersichtlichkeit wegen nur die Ursprungspunkte dargestellt. Die Ursprungspunkte wurden nach einem gewissen Schema ausgewählt. Im vorliegenden Fall wurde an jeder Kreuzung in dem abgesperrten Bereich und in einem gewissen Abstand von dem abgesperrten Bereich ein Ursprungspunkt gebildet. Die Ursprungspunkte können auch willkürlich oder zufällig gewählt werden. Ausgehend von den Ursprungspunkten werden wieder Punkte höherer Ordnung, beispielsweise bis zur vierten Ordnung konstruiert. Es wird nun festgestellt, daß die Punkte höherer Ordnung bestimmter Punktmengen vollständig in Bereichen liegen, die von anderen Punktmengen abgedeckt sind. Diese bestimmten Punktmengen werden daher nicht benötigt. In FIG. 3B sind die Ursprungspunkte 18 bis 25 der verbleibenden Punktmengen dargestellt. Die Punkte der zu dem Ursprungspunkt 18 gehörenden Punktmenge sind vollständig dargestellt. Die Punkte der zweiten Ordnung sind wie zum Beispiel der Punkt 26 wieder als schwarze Quadrate dargestellt. Die Punkte der dritten Ordnung sind wie zum Beispiel der Punkt 27 als weiße Quadrate dargestellt, und die Punkte der vierten Ordnung sind wie zum Beispiel der Punkt 28 als schwarze Dreiecke dargestellt. Analog zu dem Verfahren, das mit Bezug auf FIG. 2 beschrieben ist, faßt die Navigationszentrale 3 gewisse Punkte, zum Beispiel den Punkt 29, als fiktive Sperren auf. Außerdem wird analog zu dem Verfahren, das mit Bezug auf FIG. 2 beschrieben ist, bestimmt, welche Punkte verschiedener Punktmengen miteinander über einen Streckenabschnitt verbunden sind. Die Punktmengen werden dann jeweils wieder als Binärkode wie oben beschrieben dargestellt. Die fiktiven Sperren werden wiederum als Attribute zu bestimmten Punkten dargestellt. Die Verbindungen zwischen den Punkten unterschiedlicher Punktmengen werden ebenfalls als Attribute zu jeweils einem der Punkte oder zu beiden Punkten dargestellt. Die geographischen Koordinaten der Ursprungspunkte 16, 17, die Binärkodes der Punktmengen und die Attribute werden von der Navigationszentrale 3 wieder an die Navigationsvorrichtung 1 gesendet. Die Navigationsvorrichtung 1 rekonstruiert hierauf die Punktmengen wie in Verbindung mit FIG. 2 erklärt und überprüft die erhaltenen Punktmengen anhand des Binärkodes und der Attribute, welche die Verbindungen angeben, und legt die Positionen der Sperren fest.

## Patentansprüche

1. Navigationszentrale (3) zur Übermittlung aktueller Kartenoder Straßeninformationen an eine Navigationsvorrichtung (1) die dazu eingerichtet ist, einen Kraftfahrzeugführer entlang einer bestimmten Route zu führen, wobei die Navigationszentrale (3) eine erste Karte eines Verkehrswegenetzes aufweist und die Navigationsvorrichtung (1) eine zweite Karte des Verkehrswegenetzes aufweist und die Navigationszentrale (3) aktuellere Karten- und Straßeninformationen umfasst, und wobei die Navigationszentrale (3) dazu eingerichtet ist:
- einen ersten Punkt (5, 6, 7, 8, 26, 16, 17, 18, 19, 20, 21, 22, 23, 24, 25, 27, 28) einer Punktmenge (A, B) auf einer ersten Karte eines Verkehrswegenetzes festzulegen,
- zweite Punkte (5, 6, 7, 8, 26) der Punktmenge (A, B), auf der ersten Karte zu bestimmen,
- wobei die zweiten Punkte (5, 6, 7, 8, 26) jeweils in einem ersten Abstand von dem ersten Punkt (5, 6, 7, 8, 26, 16, 17, 18, 19, 20, 21, 22, 23, 24, 25, 27, 28) der Punktmenge (A, B) liegen,
- einen weiteren ersten Punkt (5, 6, 7, 8, 26, 16, 17, 18, 19, 20, 21, 22, 23, 24, 25, 27, 28) einer weiteren Punktmenge (A, B) auf der ersten Karte festzulegen,
- weitere zweite Punkte (5, 6, 7, 8, 26) der weiteren Punktmenge (A, B) auf der ersten Karte zu bestimmen,
- wobei die weiteren zweiten Punkte (5, 6, 7, 8, 26) jeweils in einem weiteren ersten Abstand von dem weiteren ersten Punkt (5, 6, 7, 8, 26, 16, 17, 18, 19, 20, 21, 22, 23, 24, 25, 27, 28) liegen,
- wobei die Navigationszentrale (3) und die Navigationsvorrichtung (1) dazu eingerichtet sind, ein Lokalisierungsverfahren auszuführen, wobei die Navigationszentrale (3)
ferner dazu eingerichtet ist,
- geographische Koordinaten
o des ersten Punktes (5, 6, 7, 8, 26, 16, 17, 18, 19, 20, 21, 22, 23, 24, 25, 27, 28),
o des weiteren ersten Punktes (5, 6, 7, 8, 26, 16, 17, 18, 19, 20, 21, 22, 23, 24, 25, 27, 28),
- den ersten Abstand und
- den weiteren ersten Abstand
- sowie relative Koordinaten
o der zweiten Punkte (5, 6, 7, 8, 26) bezüglich des ersten Punktes und
o der weiteren zweiten Punkte (5, 6, 7, 8, 26) bezüglich des weiteren ersten Punktes (5, 6, 7, 8, 26, 16, 17, 18, 19, 20, 21, 22, 23, 24, 25, 27, 28)
- an eine Navigationsvorrichtung (1) zu übermitteln,
- wobei die zweiten Punkte, die geographischen Koordinaten der ersten Punkte, die Abstände und relativen Koordinaten der zweiten Punkte von den ersten Punkten dazu verwendet werden können, die ersten Punkte auf der zweiten Karte zu lokalisieren,
**dadurch gekennzeichnet, dass** jeder zweite Punkt (5, 6, 7, 8, 26) nur bezüglich eines der ersten Punkte (5, 6, 7, 8, 26, 16, 17, 18, 19, 20, 21, 22, 23, 24, 25, 27, 28) übermittelt wird.

## Claims

1. Navigation centre (3) for transmitting up-to-date map or road information to a navigation apparatus (1) which is set up to guide a motor vehicle driver along a particular route, the navigation centre (3) having a first map of a transport route network and the navigation apparatus (1) having a second map of the transport route network, and the navigation centre (3) comprising more up-to-date map and road information, and the navigation centre (3) being set up:
- to stipulate a first point (5, 6, 7, 8, 26, 16, 17, 18, 19, 20, 21, 22, 23, 24, 25, 27, 28) from a set of points (A, B) on a first map of a transport route network,
- to determine second points (5, 6, 7, 8, 26) from the set of points (A, B) on the first map,
- the second points (5, 6, 7, 8, 26) each being at a first distance from the first point (5, 6, 7, 8, 26, 16, 17, 18, 19, 20, 21, 22, 23, 24, 25, 27, 28) from the set of points (A, B),
- to stipulate a further first point (5, 6, 7, 8, 26, 16, 17, 18, 19, 20, 21, 22, 23, 24, 25, 27, 28) from a further set of points (A, B) on the first map,
- to determine further second points (5, 6, 7, 8, 26) from the further set of points (A, B) on the first map,
- the further second points (5, 6, 7, 8, 26) each being at a further first distance from the further first point (5, 6, 7, 8, 26, 16, 17, 18, 19, 20, 21, 22, 23, 24, 25, 27, 28),
- the navigation centre (3) and the navigation apparatus (1) being set up to carry out a localization method, the navigation centre (3) also being set up to transmit
- geographical coordinates
∘ of the first point (5, 6, 7, 8, 26, 16, 17, 18, 19, 20, 21, 22, 23, 24, 25, 27, 28),
∘ of the further first point (5, 6, 7, 8, 26, 16, 17, 18, 19, 20, 21, 22, 23, 24, 25, 27, 28),
- the first distance and
- the further first distance
- as well as relative coordinates
∘ of the second points (5, 6, 7, 8, 26) with respect to the first point and
∘ of the further second points (5, 6, 7, 8, 26) with respect to the further first point (5, 6, 7, 8, 26, 16, 17, 18, 19, 20, 21, 22, 23, 24, 25, 27, 28)
- to a navigation apparatus (1),
- the second points, the geographical coordinates of the first points, the distances and relative coordinates of the second points with respect to the first points being able to be used to locate the first points on the second map,
**characterized in that**
every second point (5, 6, 7, 8, 26) is transmitted only with respect to one of the first points (5, 6, 7, 8, 26, 16, 17, 18, 19, 20, 21, 22, 23, 24, 25, 27, 28).

## Revendications

1. Centrale de navigation (3) destinée à transmettre des informations cartographiques ou routières actuelles à un dispositif de navigation (1), lequel est configuré pour guider un conducteur de véhicule automobile le long d'un itinéraire donné, la centrale de navigation (3) possédant une première carte d'un réseau de voies de circulation et le dispositif de navigation (1) possédant une deuxième carte du réseau de voies de circulation et la centrale de navigation (3) comprenant des informations cartographiques ou routières plus récentes, et la centrale de navigation (3) étant configurée pour :
- définir un premier point (5, 6, 7, 8, 26, 16, 17, 18, 19, 20, 21, 22, 23, 24, 25, 27, 28) d'un ensemble de points (A, B) sur une première carte d'un réseau de voies de circulation,
- déterminer des deuxièmes points (5, 6, 7, 8, 26) de l'ensemble de points (A, B) sur la première carte,
- les deuxièmes points (5, 6, 7, 8, 26) se trouvant respectivement à un premier écart du premier point (5, 6, 7, 8, 26, 16, 17, 18, 19, 20, 21, 22, 23, 24, 25, 27, 28) de l'ensemble de points (A, B),
- définir un autre premier point (5, 6, 7, 8, 26, 16, 17, 18, 19, 20, 21, 22, 23, 24, 25, 27, 28) d'un autre ensemble de points (A, B) sur la première carte,
- déterminer des autres deuxièmes points (5, 6, 7, 8, 26) de l'autre ensemble de points (A, B) sur la première carte,
- les autres deuxièmes points (5, 6, 7, 8, 26) se trouvant respectivement à un autre premier écart de l'autre premier point (5, 6, 7, 8, 26, 16, 17, 18, 19, 20, 21, 22, 23, 24, 25, 27, 28),
- la centrale de navigation (3) et le dispositif de navigation (1) étant configurés pour exécuter un procédé de localisation, la centrale de navigation (3) étant en outre configurée pour transmettre
- les coordonnées géographiques
∘ du premier point (5, 6, 7, 8, 26, 16, 17, 18, 19, 20, 21, 22, 23, 24, 25, 27, 28),
∘ de l'autre premier point (5, 6, 7, 8, 26, 16, 17, 18, 19, 20, 21, 22, 23, 24, 25, 27, 28),
- le premier écart et
- l'autre premier écart
- ainsi que les coordonnées relatives
∘ des deuxièmes points (5, 6, 7, 8, 26) par rapport au premier point et
∘ des autres deuxièmes points (5, 6, 7, 8, 26) par rapport à l'autre premier point (5, 6, 7, 8, 26, 16, 17, 18, 19, 20, 21, 22, 23, 24, 25, 27, 28)
- à un dispositif de navigation (1),
- les deuxièmes points, les coordonnées géographiques du premier point, les écarts et les coordonnées relatives des deuxièmes points par rapport au premier point pouvant être utilisés pour localiser les premiers points sur la deuxième carte,
**caractérisé en ce que**
chaque deuxième point (5, 6, 7, 8, 26) est uniquement communiqué en référence à l'un des premiers points (5, 6, 7, 8, 26, 16, 17, 18, 19, 20, 21, 22, 23, 24, 25, 27, 28).
